**Europäisches Patentamt**

**European Patent Office**

**Office européen des brevets**

(11) Publication number : **0 276 901 B1**

# EUROPEAN PATENT SPECIFICATION

(45) Date of publication of patent specification :
04.03.92 Bulletin 92/10

(51) Int. Cl.⁵: **F16M 11/10, F16M 11/12**

(21) Application number : **88300013.5**

(22) Date of filing : **05.01.88**

(54) **Tilt and swivel mechanism.**

(30) Priority : **30.01.87 US 8804**

(43) Date of publication of application :
**03.08.88 Bulletin 88/31**

(45) Publication of the grant of the patent :
**04.03.92 Bulletin 92/10**

(84) Designated Contracting States :
**DE FR GB IT**

(56) References cited :
**EP-A- 0 128 511**
**EP-A- 0 160 237**
**FR-A- 2 301 781**
**US-A- 4 372 515**

(56) References cited :
**US-A- 4 570 892**
**IBM TECHNICAL DISCLOSURE BULLETIN,
vol. 28, no. 5, October 1985, page 2209, New
York, US; "Equipment tilt mechanism"**

(73) Proprietor : **Hewlett-Packard Company
Mail Stop 20 B-O, 3000 Hanover Street
Palo Alto, California 94304 (US)**

(72) Inventor : **Thompson, Dennis C.
1610 Condor Court
Roseville California 95661 (US)**

(74) Representative : **Colgan, Stephen James et al
CARPMAELS & RANSFORD 43 Bloomsbury
Square
London WC1A 2RA (GB)**

## Description

A tilt and swivel mechanism allows a user to adjust the position of a video display device (whether a terminal or monitor) for maximum viewing comfort. A typical prior art tilt and swivel mechanism is disclosed in US-A-4570892, which describes a support base for a display monitor. An upper portion of the base receives a turntable having an upper concave surface and guide rails. The display monitor has a complementary convex lower portion and a complementary guide rail assembly so that the base engages with the display monitor.

The manufacture of such systems as that of US-A-4570892 requires fairly complicated assembly, and an excessive number of parts. Additionally, excessive friction and binding action result in awkward and difficult tilt adjustment.

US-A-4372515 discloses a support and rocking tilt apparatus according to the preamble of claim 1, mounted to the base of a display unit. The apparatus includes fore/aft retention by a spur gear and a rack gear and side-to-side retention by a rocker apparatus. Vertical retention apparatus is combined with a snubbing device, including a spring-loaded friction mechanism, which provides infinite actuation throughout the tilt range.

According to the invention, there is provided a tilt and swivel apparatus comprising a base having a first rocking surface and a first plurality of slot walls arranged to form a slot; and a rocker placed upon the base, the rocker having a first rocking leg and a first insert wall, wherein the first rocking leg comes into contact with the first rocking surface and the first insert wall is placed within the first slot; characterised in that the base additionally includes a tab slot and the rocker additionally includes a tab and wherein the tab is placed in the tab slot.

Figures 1, 2 and 3 show a tilt and swivel mechanism in accordance with the preferred embodiment of the present invention.

Figure 4 shows a friction spring used in the tilt and swivel mechanism shown in Figures 1, 2 and 3.

Figure 5 shows a rocker portion of the tilt and swivel mechanism shown in Figure 1, molded to a terminal (or monitor) in accordance with the preferred embodiment of present invention.

### Description of the Preferred Embodiment

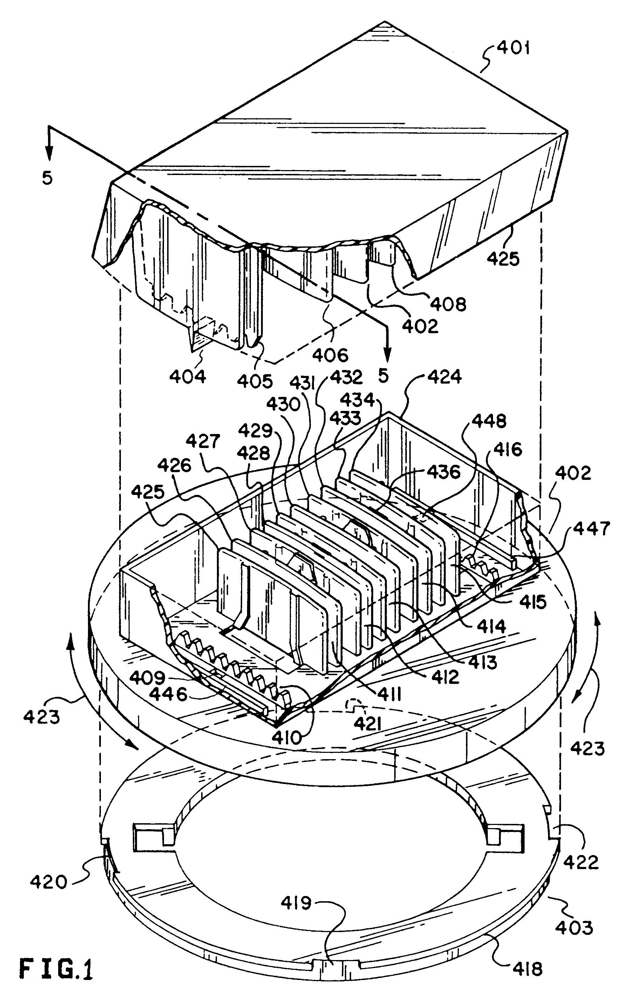

In Figure 1, an embodiment of an improved tilt and swivel mechanism is shown. A base 402 is placed upon a swivel ring 403. Base 402 moves with respect to swivel ring 403 in the direction shown by arrows 423.

Molded upon base 402 is a sleeve 424. Inside sleeve 424 are a series of slots 411, 412, 413, 414 and 415, created by slot walls 425-434. On one side of slots 411-415 is located a linear gear rack 410, a tab slot 409 and a rocking surface 446. On the other side of slots 411-415 is located gear 416, a tab slot 448 and a rocking surface 447. A friction spring 435 is attached to slot walls 427 and 428. A friction spring 436 is attached to slot walls 431 and 432. Friction spring 435 is also shown in Figure 7.

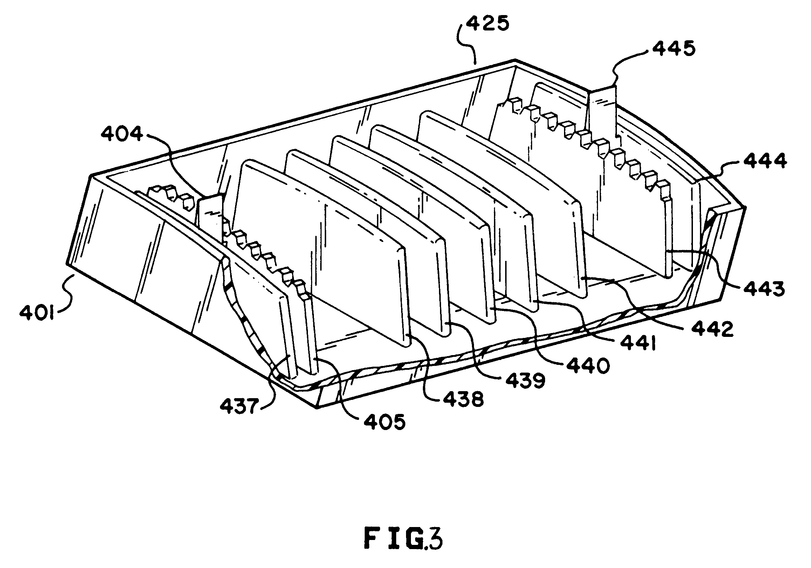

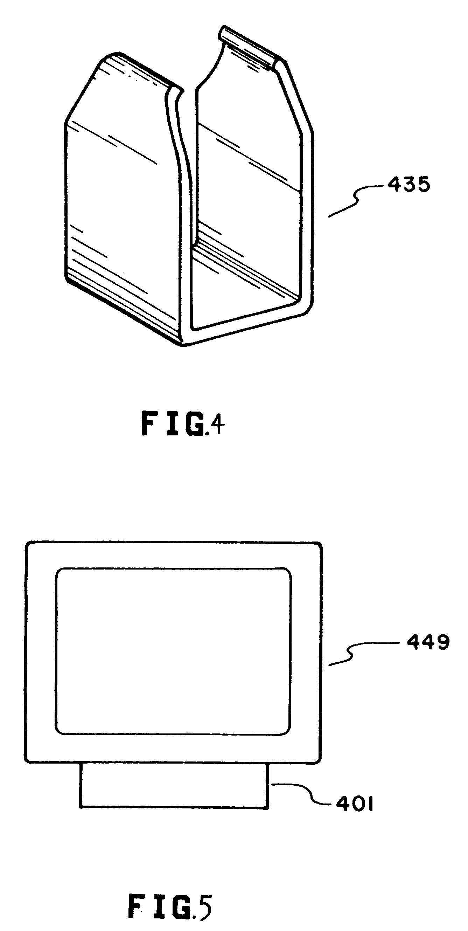

A rocker 401 is placed upon base 402. Figure 3 shows greater detail of rocker 401. A sleeve 425, runs the perimeter of rocker 401. When rocker 401 is fitted onto base 402, sleeve 425 fits over sleeve 424. Also, tabs 404 and 445 fit respectively into tab slots 409 and 448. A rocking leg 437 comes into contact with rocking surface 446, and a rocking leg 444 comes into contact with rocking surface 447. A gear leg 405 meshes with gear 410 and a gear leg 443 meshes with gear 416. Insert walls 438, 439, 440, 441 and 442 are placed in slots 411, 412, 413, 414 and 415 respectively. Friction springs 435 and 436 provide frictional compression within slots 412 and 414 respectively by preloading slot walls 425-434. Friction spring 435 is shown in Figure 4.

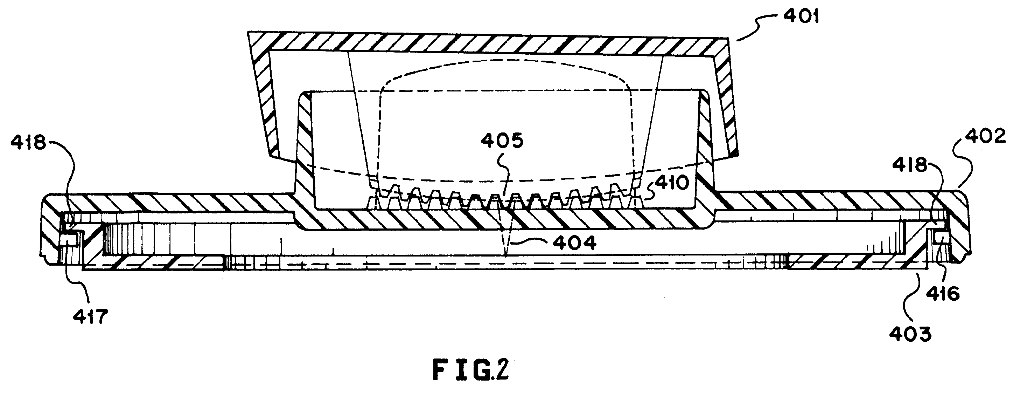

In Figure 2, rocker 401, base 402 and swivel ring 403 are shown assembled together. Gear leg 405 is shown to be curved with respect to gear rack 410, allowing for a positive, non-slipping, rocking motion. Swivel ring 403 is held in place by four tabs, (tabs 416 and 417 are shown) locking in an edge 418 of swivel ring 403. Edge 418 has slots 419, 420, 421 and 422 into which may be placed tabs 416 and 417 during assembly.

As shown in Figure 5, rocker 401 may be molded onto the case of a terminal or monitor display 449, for ease of manufacture.

### Claims

1. A tilt and swivel apparatus comprising:

a base (402) having a first rocking surface (446) and a first plurality of slot walls (425, 426) arranged to form a slot; and

a rocker (401) placed upon the base (402), the rocker having a first rocking leg (437) and a first insert wall (406), wherein the first rocking leg (437) comes into contact with the first rocking surface (446) and the first insert wall (406) is placed within the first slot; characterised in that:

the base additionally includes a tab slot (409) and the rocker additionally includes a tab (404) and wherein the tab (404) fits into the tab slot (409).

2. An apparatus according to claim 1 wherein the base includes a first gear rack (410), and the rocker includes a first leg having a first curved gear (405), and wherein the first gear rack (410) and the first curved gear intermesh (405).

3. An apparatus according to claim 1 or claim 2, further comprising friction means (438-442, 425-434) coupled to the base (402) and the rocker (401) for preventing the rocker from rocking freely on the base.

4. An apparatus according to claim 2 or claim 3, wherein the base additionally has a second gear rack (416) and the rocker additionally has a second leg (443), the second leg having a second curved gear (443), wherein the second gear rack (416) and the second curved gear (443) intermesh.

5. An apparatus according to any one of claims 1 to 4, wherein the friction means comprises:

a plurality of slot walls (425-434) coupled to the base, the slot walls arranged to form a plurality of slots; and

a plurality of insert walls (438-442) coupled to the rocker wherein the plurality of insert walls is placed within the plurality of slots.

6. An apparatus according to claim 5, wherein a friction spring (435) is attached to two slot walls of the plurality of slot walls to increase the pressure of the two slot walls upon an insert wall from the plurality of insert walls.

7. An apparatus according to any one of claims 1 to 6, wherein the rocker (401) is moulded to an object.

8. An apparatus according to claim 7, wherein the object is a video display device.


## Patentansprüche

1. Kipp- und Schwenkvorrichtung mit

einem Fuß (402) mit einer ersten Wippoberfläche (446) und einer ersten Mehrzahl von Schlitzwänden (425,426), die so angeordnet sind, daß sie einen Schlitz bilden, und

einer auf diesem Fuß (402) sitzenden Wippe (401), die ein erstes Kippbein (437) und eine erste Einsteckwand (406) aufweist, wobei das erste Kippbein (437) die erste Wippoberfläche (446) berührt und die erste Einsteckwand (406) in den ersten Schlitz eingesetzt ist,
dadurch **gekennzeichnet,**

daß der Fuß zusätzlich einen Schlitz (409) und die Wippe zusätzlich eine Nase (404) aufweisen und die Nase (404) in den Schlitz (409) paßt.

2. Vorrichtung nach Anspruch 1, bei der der Fuß eine erste Zahnstange (410) und die Wippe ein erstes Bein mit einer ersten gekrümmten Zahnscheibe (405) aufweist, und bei der die erste Zahnstange (410) und die erste gekrümmte Zahnscheibe (405) kämmen.

3. Vorrichtung nach Anspruch 1 oder 2, mit ferner einer mit dem Fuß (402) und der Wippe (401) gekoppelten Reibungsvorrichtung (438-442, 425-434), die verhindert, daß die Wippe auf dem Fuß frei schaukelt.

4. Vorrichtung nach Anspruch 2 oder 3, bei der der Fuß zusätzlich eine zweite Zahnstange (416) und die Wippe zusätzlich ein zweites Bein (443) mit einer zweiten gekrümmten Zahnscheibe (443) aufweisen, wobei die zweite Zahnstange (416) und die zweite gekrümmte Zahnscheibe (443) kämmen.

5. Vorrichtung nach einem der Ansprüche 1 bis 4, bei der die Reibungsvorrichtung aufweist:

mehrere mit dem Fuß gekoppelte Schlitzwände (425-434), die so angeordnet sind, daß sie mehrere Schlitze bilden, und

mehrere mit der Wippe gekoppelte Einsteckwände (438-442), wobei die Einsteckwände in die Schlitze eingesteckt sind.

6. Vorrichtung nach Anspruch 5, bei der eine Reibungsfeder (435) an zwei Schlitzwänden der mehreren Schlitzwände befestigt ist, um den Druck der zwei Schlitzwände auf eine der mehreren Einsteckwände zu erhöhen.

7. Vorrichtung nach einem der Ansprüche 1 bis 6, bei der die Wippe (401) mit einem Gegenstand vergossen ist.

8. Vorrichtung nach Anspruch 7, bei der der Gegenstand ein Video-Wiedergabegerät ist.


## Revendications

1. Un mécanisme d'inclinaison et de rotation comprenant :

une base (402) comportant une première surface de basculement (446) et un premier ensemble de parois de fente (425, 426) agencées pour former une fente; et

un basculeur (401) placé sur la base (402), le basculeur comportant une première nervure de basculement (437) et une première paroi d'insertion (406), la première nervure de basculement (437) entrant en contact avec la première surface de basculement (446) et la première paroi d'insertion (406) étant placée à l'intérieur de la première fente ;
caractérisé en ce que

la base comprend additionnellement une fente pour patte (409) et le basculeur comprend additionnellement une patte (404) et en ce que la patte (404) est engagée dans ladite fente réceptrice (409)

2. Un mécanisme selon la revendication 1, dans lequel la base comprend une première crémaillère (410) et le basculeur comprend une première nervure pourvue d'une première denture incurvée (405), la première crémaillère (410) et la première denture incurvée (405) étant mutuellement en prise.

3. Un mécanisme selon la revendication 1 ou la revendication 2, comprenant en outre des moyens de friction (438-442, 425-434) reliés à la base (402) et au basculeur (401) pour empêcher le basculeur de basculer librement sur la base.

4. Un mécanisme selon la revendication 2 ou la revendication 3, dans lequel la base comprend additionnellement une seconde crémaillère (416) et le basculeur comprend additionnellement une seconde nervure (443), la seconde nervure comportant une seconde denture incurvée (443), la seconde crémaillère (416) et la seconde denture incurvée (443) étant mutuellement en prise.

5. Un mécanisme selon une quelconque des revendications 1 à 4, dans lequel les moyens de friction comprennent :

une pluralité de parois de fentes (425-434) reliées à la base, les parois de fentes étant agencées pour former une pluralité de fentes ; et

une pluralité de parois d'insertion (438-442) reliées au basculeur, ladite pluralité de parois d'insertion étant placée à l'intérieur de ladite pluralité de fentes.

6. Un mécanisme selon la revendication 5, dans lequel un ressort de friction (435) est fixé sur deux parois de fentes faisant partie de ladite pluralité de parois de fentes afin d'augmenter la pression des deux parois de fentes sur une paroi d'insertion faisant partie de la pluralité de parois d'insertion.

7. Un mécanisme selon une quelconque des revendications 1 à 6, dans lequel le basculeur (401) est moulé sur un objet.

8. Un mécanisme selon la revendication 7, où l'objet est un dispositif d'affichage vidéo.

**FIG.1**

FIG.2

EP 0 276 901 B1

FIG.3

EP 0 276 901 B1

_435_

**FIG.4**

_449_

_401_

**FIG.5**